# EUROPEAN PATENT APPLICATION

(11) **EP 4 631 355 A1**
(43) Date of publication of application: **15.10.2025**
(21) Application number: 23921451.3
(22) Date of filing: 08.08.2023
(51) Int. Cl.: A01N 65/24, A01N 65/10, A01N 65/22, A01N 65/12, A01P 17/00

(54) **MOSQUITO REPELLENT COMPOSITION AND METHOD FOR PRODUCING SAME**

(30) Priority: 08.02.2023 KR 20230016971
(71) Applicant: Crenature Co., Ltd., Gangneung-si Gangwon-do 25457 (KR)
(72) Inventor: KIM, Do-young, Gangneung-si Gangwon-do 25457 (KR); LEE, Ki-hoon, Seoul 06650 (KR); CHOI, Woo-jun, Gangneung-si Gangwon-do 25515 (KR)
(74) Representative: BCKIP Part mbB
(86) International application number: PCT/KR2023/011688
(87) International publication number: WO 2024/167077

(57) **Abstract**

A mosquito repellent composition according to the present invention may be produced by: forming a mixture by mixing Cinnamomum cassia, Amomi Fructus, Chrysanthemi Flos, Agastache rugosa, root of Angelica dahurica, nutmeg, mint, and fennel each in an amount within a range of 100 parts by weight to 500 parts by weight; preparing a mixed solution by mixing 100 parts by weight of the mixture with 100 parts by weight to 700 parts by weight of ethanol having a concentration of 70% to 95% as a solvent; and then performing low-temperature ultrasonic extraction on the mixed solution to extract an effective ingredient extract.

## Description

### [Technical Field]

The present invention relates to a mosquito repellent composition and a method for producing the same, and more specifically, to a mosquito repellent composition made with natural ingredients harmless and safe to the human body, has a skin-soothing effect, and is suitable for mass production by having excellent effective ingredient extractability, and a method for producing the same.

### [Background Art]

Mosquitoes are pests not only causing direct and indirect damage such as biting people and livestock and disturbing their sleep, and restricting their outdoor activities, but also mediating various diseases such as dengue fever, yellow fever, encephalitis, and malaria.

Various solutions have been studied to protect the human body from such mosquito attacks, and a representative method among these is to spray and use a repellent, which prevents the human body from be bitten by mosquitos by containing substances that mosquitoes avoid but has almost no effect in killing mosquitoes, on the skin or clothing.

However, requirements for chemical components of a repellent are very strict, that is, the repellent needs to have a pest controlling function capable of stimulating the sensory organs of mosquitoes while considering that the repellent is sprayed and used directly on the human body, and, in addition thereto, needs to be non-toxic to the human body, and needs to have minimized impact or side effects on the human and the ecosystem.

Various mosquito repellents have been known so far, and particularly, a substance called N,N-diethyl-m-toluamide (DEET) is widely used with its excellent mosquito repellent effect. However, DEET has an unpleasant odor and has high skin penetration, and therefore, the use thereof is restricted for children, pregnant women, patients with low blood pressure, and people with sensitive skin. Particularly, the United States prohibits the manufacture of mosquito repellents containing 20% or more of DEET in concentration.

Recently, as the need for the development of mosquito repellents made with natural ingredients that are safe to the human body, cause less irritation and have a friendly scent is required, methods of using natural ingredient extracts using Cinnamomum cassia or Agastache rugosa are being considered. However, coumarin, a main ingredient of Cinnamomum cassia, has a boiling point of higher than 300°C, resulting in low heat extraction efficiency, and patchouli alcohol, an effective ingredient of Agastache rugosa, has a boiling point lower than water, making it difficult to obtain it using a heat extraction method, and a distillation method of obtaining an effective ingredient by cooling the distilled vapor needs to be used for extraction. In other words, it is difficult to standardize a production process since a method of extracting an effective ingredient is different for each material, and it is difficult to guarantee the same effect even for the same product since each effective ingredient has different extraction efficiency.

Accordingly, the applicant of the present invention proposes a mosquito repellent composition and a method for producing the same capable of increasing production efficiency by extracting various mosquito repellent natural materials using a single process, and capable of securing uniform extractability of effective ingredients included in the natural materials.

### Prior Art Documents

### Patent Documents

(Patent Document 1) Korean Patent Application Laid-Open No. 10-2011-0126888 (Natural composition for mosquito repellent having excellent durability)
(Patent Document 2) Korean Patent Application Laid-Open No. 10-2020-0137703 (Natural composition for mosquito repellent)

### Non-Patent Documents

(Non-Patent Document 1) Journal of the Korean Society of Food Science and Nutrition 41(7). 2012.07 pages 914~920

### [Disclosure]

### [Technical Problem]

An object of the present invention is to provide a mosquito repellent composition and a method for producing the same that allows natural materials having different extraction and preparation conditions to have efficient and uniform effective ingredients by a single process.

Another object of the present invention is to provide a mosquito repellent composition that repels mosquitoes using natural materials harmless to the human body, and a method for producing the same.

In addition, still another object of the present invention is to provide a mosquito repellent composition that heals skin damage caused by physical stimulation or mosquito bite without causing skin trouble when applied to the skin, and a method for producing the same.

### [Technical Solution]

The above-described objects are achieved by a mosquito repellent composition including an effective ingredient extract that is extracted by mixing Cinnamomum cassia, Amomi Fructus, Chrysanthemi Flos, Agastache rugosa, root of Angelica dahurica, nutmeg, mint, and fennel each in an amount within a range of 100 parts by weight to 500 parts by weight to form a mixture, mixing 100 parts by weight of the mixture with 100 parts by weight to 700 parts by weight of ethanol having a concentration of 70% to 95% as a solvent to prepare a mixed solution, and then performing low-temperature ultrasonic extraction on the mixed solution.

Herein, the mixture may include the Cinnamomum cassia, the Amomi Fructus, the Chrysanthemi Flos, the Agastache rugosa, the root of Angelica dahurica, the nutmeg, the mint and the fennel in equal parts by weight.

Herein, the effective ingredient extract preferably has the concentration diluted through being mixed with any one of 25% to 85% ethanol, purified water and a mixture thereof.

Herein, the low-temperature ultrasonic extraction is preferably performed by applying ultrasonic waves of 700 khz to 1400 khz to the mixed solution under a temperature of 45°C to 55°C for 24 hours to 96 hours to extract the effective ingredient extract.

The above-described objects are achieved using a method according to the present invention, the method including: producing a mixture including Cinnamomum cassia, Amomi Fructus, Chrysanthemi Flos, Agastache rugosa, root of Angelica dahurica, nutmeg, mint, and fennel each in an amount of 100 parts by weight to 500 parts by weight; producing a mixed solution by mixing 100 parts by weight of the mixture with 100 parts by weight to 700 parts by weight of ethanol having a concentration of 70% to 95% as a solvent; and extracting an effective ingredient from the mixed solution by applying ultrasonic waves in a range of 700 Khz to 1400 Khz to the mixed solution under a temperature of 45°C to 55°C.

Herein, the method may further include, after extracting the effective ingredient, diluting the concentration through mixing with any one of 25% to 85% ethanol, purified water and a mixture thereof.

Herein, the extracting is performed for 24 hours to 96 hours, and the method may further include, after the ultrasonic extraction, filtering byproducts.

### [Advantageous Effects]

The present invention is suitable for effective mass production of natural materials having different effective ingredient extraction conditions and preparation conditions by increasing extraction efficiency of effective ingredients while securing uniformity of the effective ingredients using a single process. Through this, harmfulness to the human body can be eliminated unlike existing mosquito repellents manufactured with chemical materials, and a uniform mosquito repellent effect can be obtained like products manufactured with chemical materials.

In addition, according to the present invention, a mosquito repellent composition produced from natural-derived materials maintains mosquito repellency of 95% or greater even at an extract concentration of about 33%, and therefore, is harmless to the human body unlike chemical material formulations while having an excellent mosquito repellent effect.

### [Description of Drawings]

FIG. 1 illustrates a flow chart for a method for producing a mosquito repellent composition according to one embodiment of the present invention.
FIGS. 2 to 4 show reference images for a test method performed by the applicant of the present invention.
FIG. 5 shows repellency of Culex pipiens and Aedes albopictus when a mosquito repellent according to an embodiment is applied to a test subject.
FIG. 6 shows concentration-dependent mosquito repellency of Culex pipiens for a mosquito repellent according to an embodiment.
FIG. 7 shows a result of Probit analysis performed on the result of FIG. 6.
FIG. 8 shows concentration-dependent mosquito repellency of Aedes albopictus for a mosquito repellent according to an embodiment.
FIG. 9 shows a result of Probit analysis performed on the result of FIG. 8.
FIG. 10 shows a reference drawing for the duration of a mosquito repellent effect of a mosquito repellent according to an embodiment.
FIG. 11 shows experimental images regarding skin stability and skin soothing effect when a mosquito repellent produced according to an embodiment of the present invention is applied to the skin.

### [Mode for Disclosure]

Before describing the present invention, main materials mentioned in the present invention will be briefly described as follows.

### - Following -

Cinnamomum cassia contains ingredients such as phenylpropanoid, tannin, phenolic acid, diterpenoid and coumarin, and it is noted in advance that "Cinnamomum cassia" described in the present specification does not refer to cinnamon used as a food ingredient in the West.

Cinnamomum cassia may refer to one of Chinese cassia, Vietnamese Saigon cinnamon and Indonesian cinnamon. Cinnamomum cassia commonly referred to in Korea refers to the cassia variety, however, Saigon cinnamon and Indonesian cinnamon also correspond to "Cinnamomum cassia" described in the present specification. Cinnamomum cassia refers to a bark of the above-mentioned cassia, Saigon cinnamon and Indonesian cinnamon.

Cinnamon used in western cooking has cinnamaldehyde and coumarin ingredients, which are effective ingredients that repel insects, included in an amount of only 1/100 to 1/250 compared to cassia, Saigon cinnamon and Indonesian cinnamon. In order to extract the same amount of effective ingredient, cinnamon requires 100 to 250 times more materials compared to Cinnamomum cassia mentioned in the present specification, and therefore commercial feasibility may not be secured since excessive material costs are required.

The content of cinnamaldehyde in cinnamon used in western cooking is only 0.004%, however, the content of cinnamaldehyde in Cinnamomum cassia corresponds to 1%.

Angelica dahurica Benth. et Hooker (Angelica dahurica) mentioned in the present specification is a medicinal ingredient made by drying the root of Angelica dahurica, a plant in the *Apiaceae,* and is known as a medicinal ingredient that fights off wind-related diseases, removes dampness, removes swelling and relieves pain. Root of Angelica dahurica contains Byakangelicin that is an ingredient of coumarin derivatives, oxypeucedanin essential oil and the like. Since the efficacy of Angelica dahurica is the highest in the root, Angelica dahurica described in the present specification refers to root of Angelica dahurica, and in the present specification, Angelica dahurica and root of Angelica dahurica may be described interchangeably.

The pharmacological action of Angelica dahurica mentioned in the present specification includes antibacterial actions against *Escherichia coli, Shigella* and *Hemophilus influenzae,* and stimulant actions on the vasomotor center, respiratory center and vagus nerve. Particularly, coumarin included in the root of Angelica dahurica is a material having a simple structure including a phenol group and having a sweet scent, but has a property of being hostile to insects, fungi and bacteria.

Fennel (Foeniculum vulgare Miller) is obtained by drying a mature fruit of fennel, a perennial herb in the *Apiaceae Fennel,* and contains volatile compounds (essential oil), phenylpropanoid, monoterpene, stilbene and the like. Fennel has antibacterial and antiviral functions, and in addition thereto, has sterilizing, antimite and insecticidal effects. Fennel described in the present invention refers to fruit of fennel, and fennel is described instead of being separately described as fruit of fennel.

Nutmeg is obtained by drying ripe fruit of a nutmeg tree of an evergreen broadleaf tree in the *Ranunculales Nutmeg,* and nutmeg contains a large amount of fat (28% to 34%) and essential oil (3% to 9%). The fat component is mainly formed with myristic acid and trimyristin, and the essential oil component contains d-camphene that accounts for 60% to 80% thereof, d-pinene, limonene, d-borneol, l-terpineol, geraniol, safrol and myristicin. Trimyristin included in large quantities in nutmeg is classified as an ingredient hostile to insects.

Amomi Fructus (Amomum villosum Lour) is a medicinal ingredient made from fruit of Amomum villosum, Amomum villosum var. xanthioides or Amomum longiligulare TLWu, which is a perenial herbaceous plant in the *Zingiberaceae.* The medicinal ingredient contains an aromatic essential oil ingredient in an amount of about 1.7% to 3%, and the main ingredient includes d-camphor, dboneol, bornyl acetate, linalol, neroldal, monoterpene and the like.

Mint (Mentha arvensis var piperascens) is a perennial herb in dicotyledon *Lamiales Labiatae.* The plant itself has a scent, and is upright, branching out from the top. Mint gives off a cool and refreshing scent, and has sterilizing and antibacterial effects on microorganisms such as pathogenic fungi, *Escherichia coli* and *Staphylococcus aureus* causing eczema, scabies and the like present on the skin or scalp. Limonene, one of ingredients included in mint, may also be used as a natural pesticide that kills small creatures such as insects by paralyzing their nervous systems when concentrated.

Chrysanthemi Flos (chrysanthemum) is a perennial plant in the *Campanulales Asteraceae,* and mainly contains ingredients such as essential oil, flavonoid, sesquiterpene and triterpenoid). Chrysanthemi Flos is known to have antipyretic, anti-inflammatory, antibacterial, antiviral and antioxidant effects.

Agastache rugosa is a perennial herb belonging to the *Lamiaceae* widely cultivated in the Philippines, India, Southern China and the like, also known as a Korean mint, and known to contain essential oil such as pachouli alcohol, eugenol, cinnamic aldehyde, pagostol and pachouli pyridine in an amount of about 15%. Among the ingredients of Agastache rugosa, pachouli alcohol is also effective in repelling pests, and in the past, leaves of Agastache rugosa are placed between clothes as an insecticide to protect the human body from pests.

For Agastache rugosa, extraction has been performed using a distillation method and a method of performing direct extraction by applying moisture to dried leaves. When using a distillation method, a method of destroying the cell membrane of Agastache rugosa leaves may be used before distillation. For example, from the leaves, stems and the like of dried Agastache rugosa, essential oil with a high content of Agastache rugosa (patchouli) alcohol having low-molecular ingredients with excellent volatility may be obtained using the distillation method.

A typical Agastache rugosa extract may be obtained in a liquid form from which impurities are removed through filtration using a common method, or the extract may be obtained in a powder form by concentration through a vacuum concentration method, or by a drying process such as vacuum drying, freeze drying or spray drying.

Hereinafter, the present invention will be described in detail with reference to drawings.

A mosquito repellent according to the present invention is made of natural materials. The natural materials according to the present invention are Cinnamomum cassia, Amomi Fructus, Chrysanthemi Flos, Agastache rugosa, root of Angelica dahurica, nutmeg, mint, and fennel, and the composition ratio of each material may be determined according to each of the following paragraphs.
1) A mixture may be produced by mixing Cinnamomum cassia, Amomi Fructus, Chrysanthemi Flos, Agastache rugosa, root of Angelica dahurica, nutmeg, mint, and fennel each in an amount within a range of 100 parts by weight to 500 parts by weight, or
2) a mixture may be produced by mixing Cinnamomum cassia, Amomi Fructus, Chrysanthemi Flos, Agastache rugosa, root of Angelica dahurica, nutmeg, mint, and fennel in equal parts by weight.

As for the mixture composition ratio mentioned in paragraph 1), the mixture may be produced by including the Angelica dahurica and the Cinnamomum cassia each in the content of 400 parts by weight, and the remaining materials each in the content of 100 parts by weight, thereby increasing a mosquito repellent effect by increasing the content of coumarin and coumarin derivatives having a high mosquito repellent effect.

On the other hand, the mixture may have the following composition ratio: the Angelica dahurica, the Cinnamomum cassia and the fennel are included in the content of 300 parts by weight to 500 parts by weight, 200 parts by weight to 400 parts by weight, and 200 parts by weight to 400 parts by weight, respectively, the Agastache rugosa is included in the content of 100 parts by weight to 300 parts by weight, the Amomi Fructus is included in the content of 200 parts by weight to 300 parts by weight, the nutmeg is included in the content of 100 parts by weight to 300 parts by weight, and the Chrysanthemi Flos and the mint are included each in the content of 100 parts by weight to 300 parts by weight.

The mosquito repellent having such a composition ratio has a mosquito repellent effect of 95% or greater, and shows a more superior property in the soothing effect for skin damaged by external stimuli or mosquito bite when applying the mosquito repellent according to an embodiment to the user's skin.

The composition ratio of the mosquito repellent obtained through the mixture according to paragraph 2) corresponds to a composition ratio having an optimal mosquito repellent effect in the present invention.

When the concentration of the effective ingredient extract is diluted with a mixed solution in which 83% alcohol and purified water are mixed in 1:1, the concentration-dependent mosquito repellency of the diluted effective ingredient extract is as follows.

Herein, the diluted effective ingredient extract may be described and explained as a mosquito repellent. For the convenience of explanation and understanding, it may be interchangeably described as a diluted effective ingredient extract or mosquito repellent, and when the dilution ratio is different, it may be interchangeably used as a diluted mosquito repellent or diluted effective ingredient extract.

### - Following -

When the concentration of the effective ingredient extract is 38.9%, the repellent effect of the mosquito repellent for Culex pipiens reaches 95%, and when the concentration of the effective ingredient extract is 28.4%, the repellent effect of the mosquito repellent for Aedes albopictus reaches 99.9%.

Extraction properties of the main ingredients of the composition according to the present invention are as follows.

### - Following -

Cinnamaldehyde, a main effective ingredient of Cinnamomum cassia, has a boiling point of higher than 100°C, and therefore, the effective ingredient is highly resistant to heat, and may be extracted using a heat extraction method that heats using water as a solvent.

An effective ingredient of Agastache rugosa is patchouli alcohol, which may weaken or kill insects when brought into direct contact with the insects. However, patchouli alcohol has a lower boiling point than water, and therefore, may not be obtained using a heat extraction method. In order to extract patchouli alcohol from Agastache rugosa, a distillation method of heating Agastache rugosa into vapor, and extracting the effective ingredient by cooling the vapor is commonly applied.

Menthol, an effective ingredient of mint, is highly volatile and has a very low boiling point, and therefore, may be extracted using a distillation method.

Angelica dahurica includes an effective ingredient in the root, and includes angelicin and oxypeucedanin that are coumarin-based effective ingredients. The effective ingredient of Angelica dahurica is a coumarin-based ingredient and has a high boiling point of 301.7°C, and therefore, is not extracted using a distillation method.

Flavonoid, an effective ingredient included in Chrysanthemi Flos, refers to a group of substances having a structure in which two benzene rings (C6) are linked by three carbons (C3), and includes various types of pigments such as anthocyanin, flavone, flavonol, and isoflavone. Flavonoid has a boiling point in a range of 80°C to 87°C, and the effective ingredient is readily destroyed as the temperature is closer to 100°C, the boiling point of water. An extraction method using heat extraction and a distillation method is not suitable for flavonoid, and when a distillation method or heat extraction is attempted, most of the effective ingredient may be lost.

As examined above, it may be seen that a heat extraction method may be used for Cinnamomum cassia and Angelica dahurica, a distillation method may be used for mint and Agastache rugosa, and a heat extraction method or a distillation method is not suitable for Chrysanthemi Flos. In other words, three or more extraction methods are required for the natural materials of the mosquito repellent, and due to this problem, natural material-based mosquito repellents have been made only with Cinnamomum cassia or Angelica dahurica by using a heat extraction method, or mosquito repellents made by combining Cinnamomum cassia, Angelica dahurica or Chrysanthemi Flos and herbal plants have been studied. Accordingly, the applicant of the present invention intends to extract the effective ingredients from the six natural materials by a single process using the following method, and secure uniformity and mass producibility of the effective ingredients therethrough.

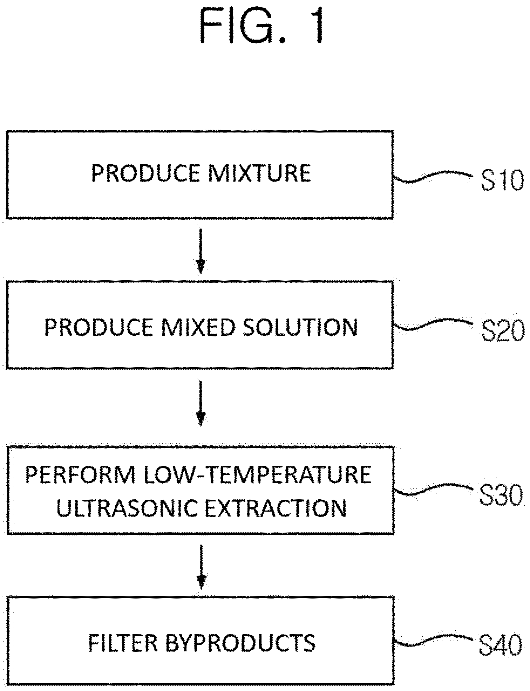

FIG. 1 illustrates a flow chart for a method for producing the mosquito repellent composition according to one embodiment of the present invention.

Referring to FIG. 1, the method for producing the mosquito repellent composition according to one embodiment of the present invention produces, a mixture including Cinnamomum cassia, Amomi Fructus, Chrysanthemi Flos, Agastache rugosa, root of Angelica dahurica, nutmeg, mint, and fennel in equal parts by weight (S10). Herein, the mixture may have a chip or powder form.

Herein, the reason for making the mixture in a chip or powder form is to efficiently extract the effective ingredients of the materials (Cinnamomum cassia, Amomi Fructus, Chrysanthemi Flos, Agastache rugosa, root of Angelica dahurica, nutmeg, mint, and fennel), and making the mixture in a chip or powder form corresponds to a process of finely crushing the mixture into a chip or powder form. When crushed into a chip, the chip size may be in a range of 1 mm to 10 mm, and the chip may be crushed to have a regular shape or irregular shape. The chip does not necessarily maintain a uniform shape.

Then, 100 parts by weight of the mixture may be mixed with 100 parts by weight to 700 parts by weight of ethanol having a concentration of 70% to 95% as a solvent to produce a mixed solution (S20). Herein, the ethanol solvent may be heated under a low temperature of 45°C to 55°C, and the temperature of 45°C to 55°C corresponds to a temperature range in which the volatile and non-volatile effective ingredients as well as the alcohol, the solvent, are not damaged or volatized.

The heating temperature of the mixed solution corresponds to a minimum of 40°C and a maximum of 80°C, and temperatures lower than or higher than this range are not suitable for effective ingredient extraction.

When the ethanol and the mixture are mixed, the mixture is present in a particle form in the ethanol. When a mixture of the ethanol and the mixture is referred to as a mixed solution, the mixed solution may have a temperature of 45°C to 55°C. The temperature of the mixed solution may be determined according to the following two conditions.

### - Following -

1) When the effective ingredients are volatile or readily destroyed at a high temperature such as patchouli alcohol, menthol and flavonoid, the temperature of the mixed solution needs to be lower than the temperature at which these effective ingredients are volatized or destroyed.
2) When extracting the effective ingredients from the mixed solution, extraction efficiency of the effective ingredients increases as the temperature of the mixed solution is higher. The amount of effective ingredients extracted per unit time (for example, 1 hour) increases as the temperature of the mixed solution is higher.

This is also mentioned in the literature explaining the relationship between extraction of oriental medicine ingredients and temperature.

Journal of the Korean Society of Food Science and Nutrition 41(7) (2012.07) (pages 914~920) indicates that effective ingredient extraction efficiency of most oriental medicine materials increases in proportion to a temperature of solution (or solvent).

Journal of the Korean Society of Food Science and Nutrition 41(7) (2012.07) (pages 914~920) indicates that effective ingredients of oriental medicine materials are extracted to the maximum using a heat extraction method of heating a solution (or solvent, hereinafter not included). In addition, the literature indicates that a heat extraction method shows effective ingredient extraction efficiency of 2 to 4 times higher than that of an extraction method using ultrasonic waves in a 22 khz to 40 khz band at room temperature (24°C).

In the mosquito repellent according to the present invention, a number of non-volatile compounds (for example, cinnamaldehyde, angelicin, oxypeucedanin and the like) and volatile compounds (menthol, flavonoid, patchouli alcohol and the like) affecting mosquitoes such as cinnamaldehyde, patchouli alcohol and menthol compounds are present, and therefore, there is a great concern about losing effective ingredients of volatile effective ingredients when a heat extraction method is used. Accordingly, the applicant of the present invention has considered a method of preventing the effective ingredients included in the mixture from being volatized while increasing extraction efficiency by applying mild heat to the mixed solution, and drastically reducing the time required to produce a mosquito repellent that has a high effective ingredient content and is environmental-friendly.

For this, the applicant of the present invention has considered a method of setting the maximum temperature at which the volatile compounds are not damaged to 80°C, heating the mixed solution to a temperature below 80°C, the maximum temperature, and then performing an ultrasonic extraction method.

Herein, the temperature of the mixed solution at which the low-temperature ultrasonic extraction method is used may have a temperature range as described below, and the lower the temperature range, the longer the extraction time, and the higher the temperature range, the shorter the extraction time.
- 41°C or higher and 79°C or lower,
- 42°C or higher and 78°C or lower,
- 43°C or higher and 77°C or lower,
- 44°C or higher and 76°C or lower,
- 45°C or higher and 75°C or lower,
- 46°C or higher and 74°C or lower,
- 47°C or higher and 73°C or lower,
- 48°C or higher and 72°C or lower,
- 49°C or higher and 71°C or lower,
- 50°C or higher and 70°C or lower,
- 51°C or higher and 69°C or lower,
- 52°C or higher and 68°C or lower,
- 53°C or higher and 67°C or lower,
   - 54°C or higher and 66°C or lower,
   - 55°C or higher and 65°C or lower.

Preferably, the mixed solution is warmed to a temperature range of 45°C to 55°C to minimize destruction or damage to the volatile effective ingredients and to suppress volatilization of the volatile effective ingredients as much as possible, and the mixed solution is heated to a temperature higher than room temperature (24°C).

Then, low-temperature ultrasonic extraction is performed on the mixed solution (S30). The ultrasonic wave of an embodiment has a frequency range of 700 khz to 1400 khz instead of ultrasonic waves having a 40 Khz frequency range applied to common oriental medicine or herbal medicine.

The frequency band of the ultrasonic waves corresponds to 700 khz to 1400 khz, and the effective ingredients are extracted by strongly vibrating the mixed solution.

The ultrasonic extraction is performed under a temperature of 45°C to 55°C, and the applicant of the present invention refers to this as "low-temperature ultrasonic extraction (method) " considering that it is a relatively low temperature compared to 100°C or higher, a normal heating temperature of natural materials.

The low-temperature ultrasonic extraction may be performed on the mixed solution for about 24 hours to 96 hours.

When the temperature of the mixed solution is from 45°C to 55°C, the duration is close to 96 hours, and when the temperature of the mixed solution is from 55°C to 80°C, the time during which the low-temperature ultrasonic extraction is performed may be reduced to 24 hours or a time close thereto.

From the chip or powder-formed natural materials (Cinnamomum cassia, Amomi Fructus, Chrysanthemi Flos, Agastache rugosa, root of Angelica dahurica, nutmeg, mint, and fennel) included in the mixed solution, the effective ingredients are extracted into an alcohol, the solvent, by the low-temperature ultrasonic extraction. The effective ingredients extracted into an alcohol are dissolved in the alcohol to become an aqueous solution type, and this may be placed in a container to be productized.

Herein, the temperature of the mixed solution to which the low-temperature ultrasonic extraction method is applied may have a temperature range described below, and the lower the temperature range, the longer the extraction time, and the higher the temperature range, the shorter the extraction time.

The mixed solution is vibrated by ultrasonic waves under a temperature (45°C to 55°C) that is low for the effective ingredient to be volatized, but higher than room temperature (24°C) to elute the effective ingredients.

Lastly, the mixed solution may be filtered to filter the effective ingredients and byproducts such as debris generated during the effective ingredient extraction process (S40), and after producing the effective ingredient extract, the extract may be placed in a container to be productized.

Herein, the concentration of the extracted effective ingredient extract may be diluted through mixing with 25% to 85% ethanol so that the extract is delivered at an appropriate concentration before being productized, and the effective ingredient extract may be diluted by mixing with 25% to 85% ethanol or mixing with distilled water to adjust the concentration of the effective ingredient extract.

Such a concentration dilution may be additionally performed as a step of diluting the concentration of the effective ingredient extract after S40. This is a step of diluting the extract to the concentration required to obtain a mosquito repellent effect, and the concentration of the effective ingredient extract is reduced compared to that of the original solution, and the burden on the human body may be reduced.

In addition, in the concentration dilution, the effective ingredient extract may also be diluted using a mixture of 25% to 85% ethanol and distilled water mixed in 1:1. However, the dilution is not limited thereto.

Hereinafter, mosquito repellent effects of the mosquito repellent produced according to an embodiment will be examined through specific experiments.

### ■ Experiment 1

### 1. Experimental Condition.

### 1) Selection of Mosquitoes

As mosquitoes used for the experiment, 200 female adult Culex pipiens or 50 female adult Aedes albopictus were placed in an experimental screened cage (80 cmX40 cmX40 cm) with visible interior 1 hour before the experiment to be stabilized. All test conditions were identical for the two mosquito species, however, since preference for biting human varies depending on the mosquito species, 200 female adult Culex pipiens were used and 50 female adult Aedes albopictus were used for smooth experiments.

Herein, the temperature inside the screen cage was 27.2±2°C, and the relative humidity therein was 65±10%.

### 2) Condition of Test Subject

The test subject wore a mask so that outbreathing does not affect mosquito biting. The test was conducted after 6 PM, the time zone when nocturnal Culex pipiens actively bites, and around 10 AM or between 3 PM and 6 PM, the time zone when diurnal Aedes albopictus most actively bites.

The test subject was covered with cotton gloves and cotton, except for the exposed skin area of about 100 cm² on the forearm between the wrist and the elbow. The same mosquitoes were used for the same person with the left arm employed as a control group and the right arm as a treatment group. The concentration of ethanol solution used for the control group was 25% in accordance with the WHO (World Health Organization) standard.

Then, the exposed skin of the arm was evenly applied with 1 mL of 25% ethanol and dried for about 1 minute to be employed as the control group. The arm applied with ethanol was put into the screen cage having 200 female mosquitoes in the case of experimenting with Culex pipiens or 50 female mosquitoes in the case of experimenting with Aedes albopictus, and the number of mosquitoes landing on the skin was recorded for 3 minutes at 1-minute intervals depending on the degree of attempt to bite.

When the landing rate of mosquitoes on the arm of the test subject was 2 mosquitoes or more within 30 seconds, or 1 mosquito within 30 seconds and 1 mosquito within the next 30 seconds, it was considered as mosquito population ready to bite, and the test started.

### 3) Condition of Mosquito Repellent Dilution

A power-type mixture including Cinnamomum cassia, Amomi Fructus, Chrysanthemi Flos, Agastache rugosa, root of Angelica dahurica, nutmeg, mint, and fennel in equal parts by weight was produced, 100 parts by weight of the mixture was mixed with 100 parts by weight to 700 parts by weight of 83% ethanol as a solvent to produce a mixed solution, then low-temperature ultrasonic extraction was performed on the mixed solution to extract an effective ingredient extract, and then the extracted effective ingredient extract was mixed with ethanol having a concentration of 25% or purified water to adjust the concentration, and as a result, an effective ingredient extract with 5 concentrations (hereinafter, described as mosquito repellent) was prepared.

The concentration of the mosquito repellent corresponds to 1%, 3%, 10%, 20% and 33.3%, and it was observed how mosquito repellent effect and duration changed as the concentration goes from low concentration (1%) to high concentration (33%).

### 2. Experimental Method

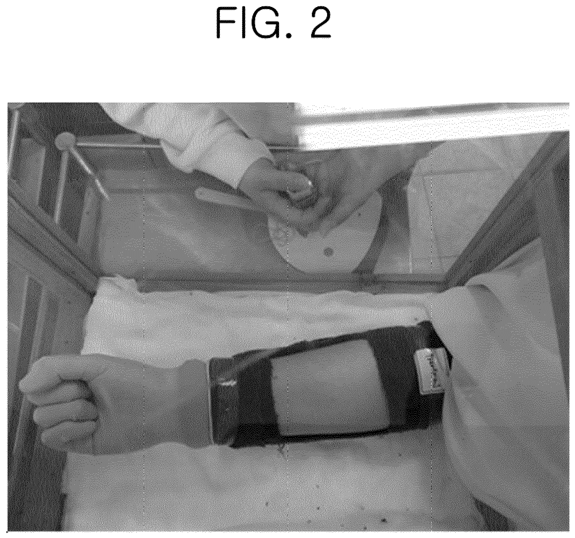

As shown in FIG. 2, the test subject was covered with cotton gloves and cotton, except for the exposed skin area of about 100 cm² on the forearm between the wrist and the elbow.

The experimental method shown in FIG. 2 has some differences in the experimental time and method depending on whether the mosquitoes are diurnal or nocturnal.

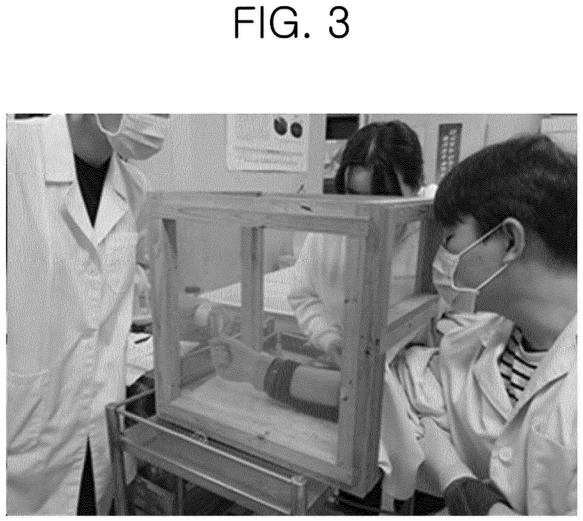

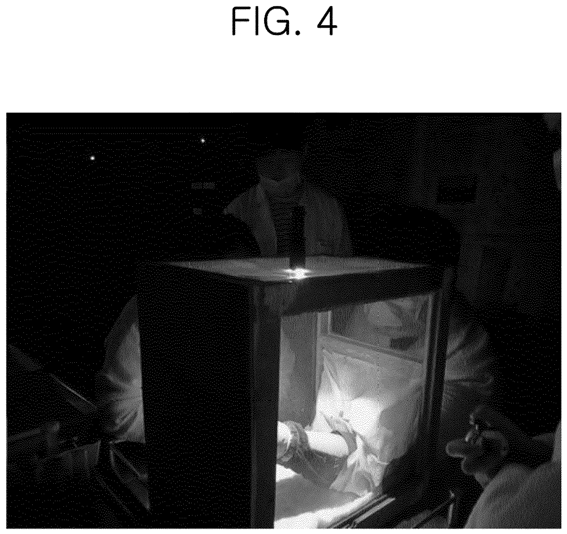

When conducting the experiment on diurnal Aedes albopictus, the experiment is conducted in the time zone around 10 AM, or between 3 PM and 6 PM as shown in FIG. 3. However, when conducting the experiment on nocturnal Culex pipiens, the area around the screen cage is kept dark in accordance with the experimental time zone, leaving only the light to observe the Culex pipiens inside the screen cage as shown in FIG. 4.

When the left arm of the test subject is defined as a control group and the right arm as a treatment group, the experiment was conducted so that the same test subject was brought into contact with the same mosquito group with both arms of the same test subject as the control group and the treatment group. The concentration of ethanol solution used for the control group was 25% in accordance with the WHO (World Health Organization) standard. The exposed skin of the arm was evenly applied with 1 mL of 25% ethanol and dried for about 1 minute to be employed as the control group.

The arm applied with ethanol was put into the screen cage having 200 female mosquitoes in the case of experimenting with Culex pipiens or 50 female mosquitoes in the case of experimenting with Aedes albopictus, and the number of mosquitoes landing on the skin was recorded for 3 minutes at 1-minute intervals depending on the degree of attempt to bite. When the landing rate of mosquitoes on the arm of the test subject was 2 mosquitoes or more within 30 seconds, or 1 mosquito within 30 seconds and 1 mosquito within the next 30 seconds, it was considered as mosquito population ready to bite, and the test started.

The exposed forearm of the treatment group was treated with the sample solution in the same manner as the control group, and then tested in the same manner. Each test was performed using the same mosquitoes for the same test subject, and was completed within 1 day. As a repetitive test, this process was repeated using different batches of mosquitoes over several days. The repetitive test was conducted at least three times for a statistical analysis.

### 3. Calculation of Mosquito Repellent Effect

To statistically analyze the experimental data, the mosquito repellency was calculated by correcting the repellency of the treatment group using the modified Abbott formula after considering the biting attempt rate for the control group (Abbott 1925). The modified Abbott formula is as follows. Repellency (%) = 100 × (number of landing on control group - number of landing on treatment group)/number of landing on control group

In order to identify the effective concentration range of the mosquito repellent, a mosquito repellent diluent was prepared using 25% ethanol as a solvent. Concentrations at which mosquitoes showed a repellent response were used, and among these, 2 to 3 concentrations at which the mosquitoes showed a repellent response of 50% or less, and 2 to 3 concentrations at which the mosquitoes showed a repellent response of 50% or greater were selected and used.

Each of the repellents having the selected concentrations was applied to the test forearm of each test subject, and the experiment for identifying the repellent effect was conducted. A minimum of 5 concentrations were used. Each test was performed using the same mosquitoes for the same test subject, and was completed within 1 day. As a repetitive test, this process was repeated using different batches of mosquitoes over several days. The repetitive test was conducted at least three times for each test subject. The repellent effect was calculated by substituting the result to the modified Abbott formula mentioned above. Effective Concentrations (EC) EC50, EC95 and EC99.9 of the mosquito repellent were determined with a 95% confidence limit using Probit analysis.

### 4. Calculation of Mosquito Repellent Effect Duration (Complete Protection Time, CPT)

This test is an experiment to find out the complete protection time (CPT) of the mosquito repellent according to an embodiment of the present invention. The experimental method is the same as the experimental method of measuring the mosquito repellent effect described above, and, after applying the mosquito repellent on the test subject, the mosquito repellent effect was measured every hour for up to 5 hours. However, the test was terminated when the mosquito repellent effect became 20% or less. In order to measure the mosquito repelling, the test subject was exposed for 3 minutes each time, and the number of mosquito landings on the test subject was measured. This test was repeated at 60-minute intervals.

In order to evaluate the continuance of mosquito repelling of the mosquito repellent, the test for difference in the elapsed time after spraying the mosquito repellent was conducted using the Duncan's multiple range test statistical method, and the result was analyzed at a 95% probability level through a SPSS PC statistical program.

### 5. Experimental Results

### 1) Effect of Mosquito Repelling for Mosquito Repellent

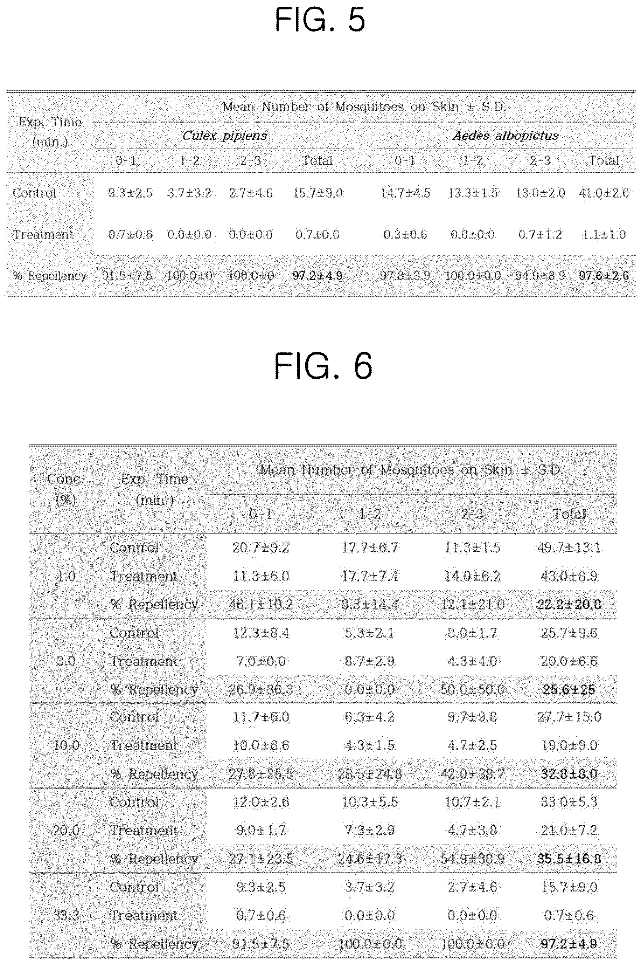

Repellency was measured for Culex pipiens and Aedes albopictus at an effective ingredient extract concentration of 33.3% (original solution of oriental medicine:83% ethanol:purified water=1:1:1). As a result of identifying repellency for the two mosquito species for 3 minutes, the repellency was an average of 97.2% for Culex pipiens and an average of 97.6% for Aedes albopictus as shown in FIG. 5.

### 1-1) Repellency of Culex Pipiens

In order to identify effective concentrations EC50, EC90 and EC99.9 of the mosquito repellent for Culex pipiens, repellency was measured at 5 or more concentrations, that is, 1%, 3%, 10%, 20% and 33.3%. The measurement results are shown in FIG. 6.

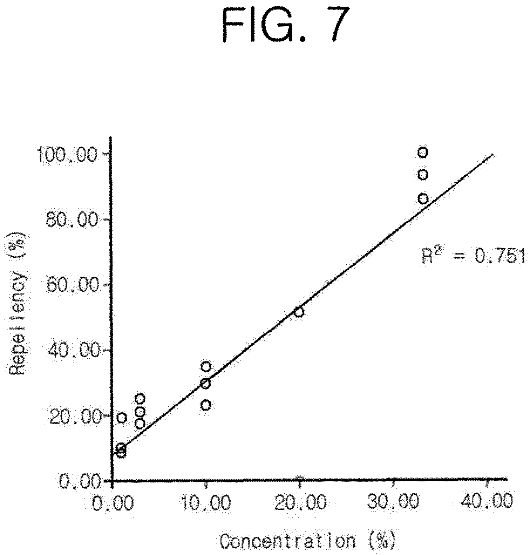

As a result of conducting Probit analysis using the mosquito repellency derived at each concentration (1%, 3%, 10%, 20% and 33.3%) of the mosquito repellent with a 95% confidence limit, R2=0.751, y=2.232x+7.982 was obtained as shown in FIG. 7.

It may be seen in FIG. 6 that repellency for Culex pipiens corresponds to from 22% to 35% when the concentration of the mosquito repellent is from 1% to 20%, however, the mosquito repellent effect reaches 97% when the concentration of the mosquito repellent reaches 33%.

Although not shown in FIG. 6, it was identified in the experiment conducted by the applicant of the present invention that the effective concentration (EC50) having mosquito repellency of 50% was reached when the concentration of the mosquito repellent was 18.8%, the effective concentration (EC90) having repellency of 95% was reached when the concentration of the mosquito repellent was 38.9%, and the effective concentration (EC99.9) having repellency of 99% was reached when the concentration of the mosquito repellent was 40.8%.

### 1-2) Repellency of Aedes albopictus

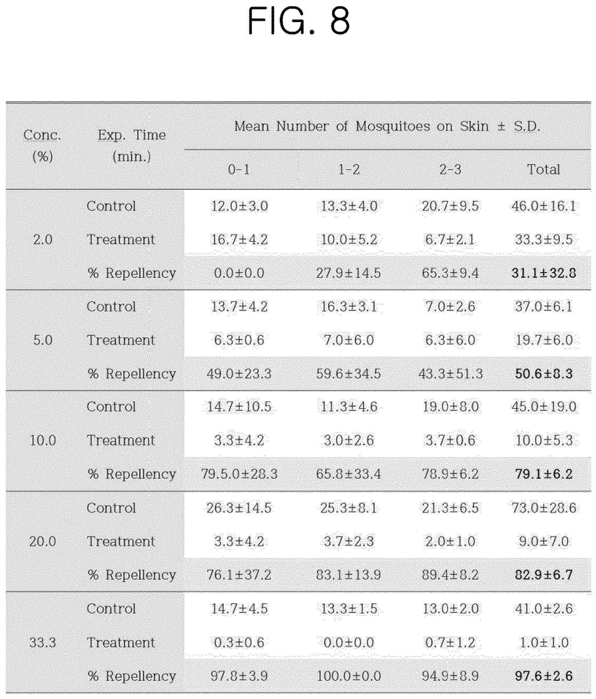

In order to identify effective concentrations EC50, EC90 and EC99.9 of the mosquito repellent for Aedes albopictus, mosquito repellency was measured at 5 concentrations (2%, 5%, 10%, 20% and 33.3%), and the results are shown in FIG. 8.

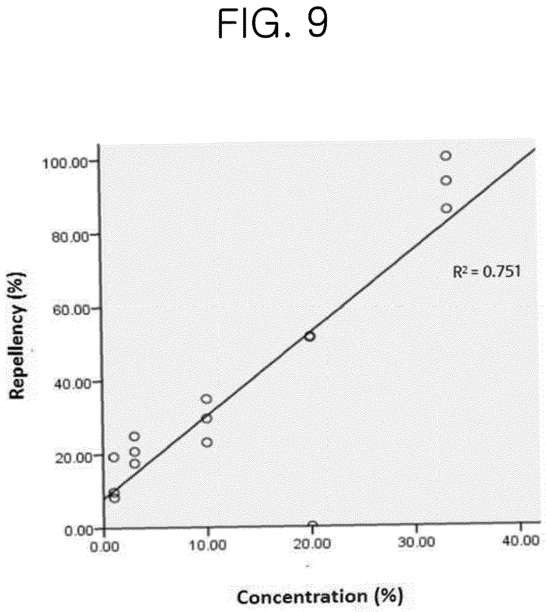

As a result of conducting Probit analysis using the mosquito repellency derived at each concentration (2%, 5%, 10%, 20% and 33.3%) with a 95% confidence limit, R2=0.738, y=2.201x+35.421 was obtained as shown in FIG. 9.

Meanwhile, it was identified that the effective concentration (EC50) at which Aedes albopictus showed repellency of 50% corresponded to when the concentration of the mosquito repellent was 6.94%, the effective concentration (EC90) at which Aedes albopictus showed repellency of 95% corresponded when the concentration of the mosquito repellent was 28.4%, and the effective concentration (EC99.9) at which Aedes albopictus showed repellency of 99% corresponded to when the concentration of the mosquito repellent was 30.3%.

### 2) Repellent Effect Duration of Mosquito Repellent.

In order to evaluate the continuance of mosquito repelling of the mosquito repellent, repellency was measured at 1-hour intervals after treatment with the mosquito repellent. A concentration calculated to show repellency of 95% or greater in the previous experiment was selected as the concentration of the mosquito repellent. Accordingly, the experiment was conducted on 200 female Culex pipiens using the repellent having a concentration of 33.3%, and the experiment was conducted on 50 female Aedes albopictus using the repellent having a concentration of 30%.

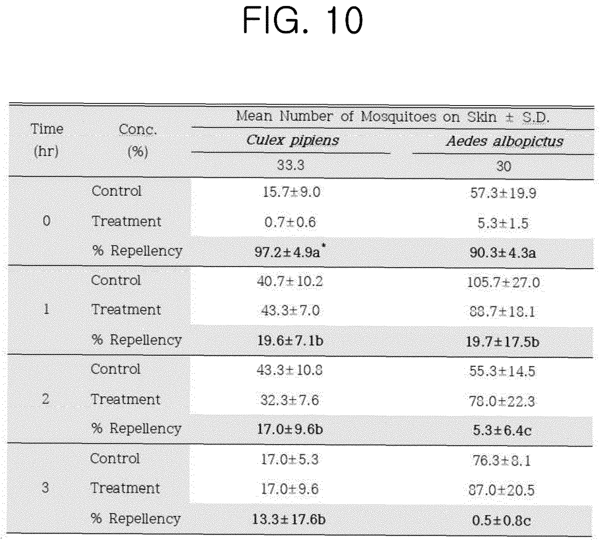

The experimental results are shown in FIG. 10, and the repellency immediately after the treatment with the mosquito repellent was 97.2% for Culex pipiens and 90.3% for Aedes albopictus. Repellency after 3 hours was 13.3% for Culex pipiens and 0.5% for Aedes albopictus.

As shown in FIG. 10, the repellency was greater than 90% immediately after the treatment for both mosquito species, however, the repellency decreased to 20% or less after 1 hour from the treatment. As a result of analyzing a time-dependent difference in the mosquito repellency with a 95% confidence limit using the Duncan's multiple range test, the mosquito repellency immediately after the treatment with the mosquito repellent was higher than the mosquito repellency after 1, 2 and 3 hours for Culex pipiens, however, there was no difference in the mosquito repellency between 1, 2 and 3 hours. For Aedes albopictus, the mosquito repellency immediately after the treatment with the mosquito repellent was higher than the repellency after 1 hour and the mosquito repellency after 1 hour was higher than the repellency after 2 hours, however, there was no difference in the mosquito repellency between 2 and 3 hours.

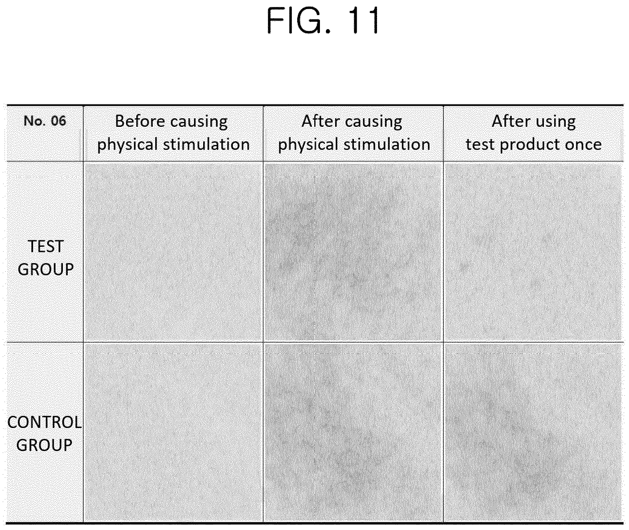

FIG. 11 shows experimental images regarding skin stability and skin soothing effect when the mosquito repellent produced according to an embodiment of the present invention is applied on the skin of the test subject.

The experiment was conducted on test subjects aged 19 to 60 who had not suffered from skin diseases within 6 months from the test date and had not undergone a procedure for skin care, and the images presented in FIG. 11 were taken using an Antera 3D device.

As for the experimental method, physical stimulation was given to the test subject's forearm to cause erythema, then 2 ml of the mosquito repellent was applied per 1 cm² of the test subject's forearm, and the results were photographed.

In order to ensure fairness of the experiment, the mosquito repellent was applied on any one side of the both forearms of the test subject, which was employed as a test group, and the other forearm not applied with the mosquito repellent was employed as a control group.

In other words, the results of the same test subject who has the same test subject reactivity when the mosquito repellent was and was not applied were used. The experiment was conducted on a total of 22 people, and the applicant of the present invention presented representative images among them.

Referring to FIG. 11, the test group and the control group of the test subject are examined, and physical stimulation is given to the test group and the control group to cause redness (erythema) on the forearm. When examining the images of the test group in FIG. 11, images under the "before causing physical stimulation" section represent Antera 3D images before applying physical stimulation to the test subject, images under the "after causing physical stimulation" section represent Antera 3D images after applying physical stimulation to the test subject, and images under the "after using test product once" section represent images after 6 hours after applying 2 ml of the mosquito repellent according to an embodiment of the present invention per 1 cm².

As shown in FIG. 11, it may be seen that the control group on which the mosquito repellent according to an embodiment of the present invention was not applied after physical stimulation has almost no skin soothing effect and no significant change in the skin color redness average.

On the other hand, it may be seen that the test group has skin color redness average being reduced after applying the mosquito repellent according to an embodiment of the present invention. The skin color redness average was improved in all of the 22 test subjects, and it was observed that the improvement ranged from a minimum of 9.29% to a maximum of 51.3%.

In addition, when 24 hours had passed after applying the mosquito repellent, there was no test subject experiencing side effects on the skin.

This is due to the fact that the mosquito repellent according to an embodiment of the present invention is formed with nature-derived materials, and is used at an appropriate concentration of 33%.

Through Experiment 2, it may be seen that the mosquito repellent according to an embodiment of the present invention is harmless to the human body, and has a skin soothing effect without causing side effects.

The embodiments and the accompanying drawings of the present specification merely show some of the technical ideas included in the present invention clearly, and it is obvious that various modified embodiments and specific embodiments that may be readily inferred by those skilled in the art within the scope of the technical ideas included in the specification and the drawings of the present invention are all included in the scope of a right of the present invention.

## Claims

1. A mosquito repellent composition comprising an effective ingredient extract,
wherein the effective ingredient extract is extracted by mixing Cinnamomum cassia, Amomi Fructus, Chrysanthemi Flos, Agastache rugosa, root of Angelica dahurica, nutmeg, mint, and fennel each in an amount within a range of 100 parts by weight to 500 parts by weight to form a mixture, mixing 100 parts by weight of the mixture with 100 parts by weight to 700 parts by weight of ethanol having a concentration of 70% to 95% as a solvent to prepare a mixed solution, and then performing low-temperature ultrasonic extraction on the mixed solution.

2. The mosquito repellent composition of claim 1, wherein the mixture includes the Cinnamomum cassia, the Amomi Fructus, the Chrysanthemi Flos, the Agastache rugosa, the root of Angelica dahurica, the nutmeg, the mint and the fennel in equal parts by weight.

3. The mosquito repellent composition of claim 1, wherein the effective ingredient extract has the concentration diluted through being mixed with any one of 25% to 85% ethanol, purified water and a mixture thereof.

4. The mosquito repellent composition of claim 1, wherein the low-temperature ultrasonic extraction is performed by applying ultrasonic waves of 700 khz to 1400 khz to the mixed solution under a temperature of 45°C to 55°C for 24 hours to 96 hours to extract the effective ingredient extract.

5. A method for producing a mosquito repellent composition, the method comprising:
producing a mixture including Cinnamomum cassia, Amomi Fructus, Chrysanthemi Flos, Agastache rugosa, root of Angelica dahurica, nutmeg, mint, and fennel each in an amount of 100 parts by weight to 500 parts by weight;
producing a mixed solution by mixing 100 parts by weight of the mixture with 100 parts by weight to 700 parts by weight of ethanol having a concentration of 70% to 95% as a solvent; and
extracting an effective ingredient from the mixed solution by applying ultrasonic waves in a range of 700 Khz to 1400 Khz to the mixed solution under a temperature of 45°C to 55°C.

6. The method of claim 5, further comprising, after extracting the effective ingredient, diluting the concentration through mixing with any one of 25% to 85% ethanol, purified water and a mixture thereof.

7. The method of claim 5, wherein the extracting is performed for 24 hours to 96 hours, and the method further comprises, after the ultrasonic extraction, filtering byproducts.
